# EUROPEAN PATENT APPLICATION

(11) **EP 1 571 866 A2**
(43) Date of publication of application: **07.09.2005**
(21) Application number: 05004935.2
(22) Date of filing: 07.03.2005
(51) Int. Cl.: H04Q 7/38

(54) **System and method for periodic ranging in sleep mode in broadband wireless access communication system**

(30) Priority: 05.03.2004 KR 2004015219
(71) Applicant: SAMSUNG ELECTRONICS CO., LTD., Gyeonggi-do (KR)
(72) Inventor: Son, Yeong-Moon, Yeongtong-gu Suwon-si Gyeonggi-do (KR); Koo, Chang-Hoi, Yeongtong-gu Suwon-si Gyeonggi-do (KR); Son, Jung-Je, Yeongtong-gu Suwon-si Gyeonggi-do (KR); Lim, Hyoung-Kyu, Yeongtong-gu Suwon-si Gyeonggi-do (KR); Kim, So-Hyun, Yeongtong-gu Suwon-si Gyeonggi-do (KR); Kang, Hyun-Jeong, Yeongtong-gu Suwon-si Gyeonggi-do (KR); Lee, Sung-Jin, Yeongtong-gu Suwon-si Gyeonggi-do (KR)
(74) Representative: Grünecker, Kinkeldey, Stockmair & Schwanhäusser Anwaltssozietät

(57) **Abstract**

A method and a system for periodic ranging in a sleep mode of a broadband wireless access communication system having an awake mode in which data to be transmitted between a mobile subscriber station (MSS) and a base station (BS) exists and the sleep mode in which data to be transmitted between the MS and the BS does not exist, the sleep mode having a sleep interval and a listening interval, the MSS being capable and incapable of receiving data in the listening interval and in the sleep interval, respectively. The BS reports to the MSS in a listening interval before the sleep interval that the MSS must perform the periodic ranging in the sleep interval when the BS detects that it is necessary for the MSS in the sleep mode to perform the periodic ranging at a particular time point in the sleep interval.

## Description

### BACKGROUND OF THE INVENTION

### 1. Field of the Invention

The present invention relates to a broadband wireless access communication system, and more particularly to a system and method for periodic ranging for a subscriber station(SS) in a sleep mode.

### 2. Description of the Related Art

In a 4^{th} generation (4G) communication system (which is the next generation communication system), research is being actively pursued to provide users with services having various qualities of service (QoSs) at a high transmission speed. Currently, in the 4G communication system, research is being undertaken to support high speed services while ensuring mobility and QoS for Broadband Wireless Access (BWA) communication systems such as a wireless local area network (LAN) and a metropolitan area network (MAN) system. Representative communication systems arranged in order to achieve such goals as described above include the Institute of Electrical and Electronics Engineers(IEEE) 802.16a communication system and the IEEE 802.16e communication system.

The IEEE 802.16a communication system and the IEEE 802.16e communication system employ an Orthogonal Frequency Division Multiplexing (OFDM) scheme and an Orthogonal Frequency Division Multiple Access (OFDMA) scheme in order to support a broadband transmission network for a physical channel of the wireless MAN system. The IEEE 802.16a communication system considers only a single cell structure and stationary subscriber stations, which means the system does not in any way reflect mobility of the SSs at all. In contrast, the IEEE 802.16e communication system has been defined as a system reflecting the mobility of a SS in addition to the IEEE 802.16a communication system. Here, an SS having the mobility is referred to as amobile subscriber station(MSS).

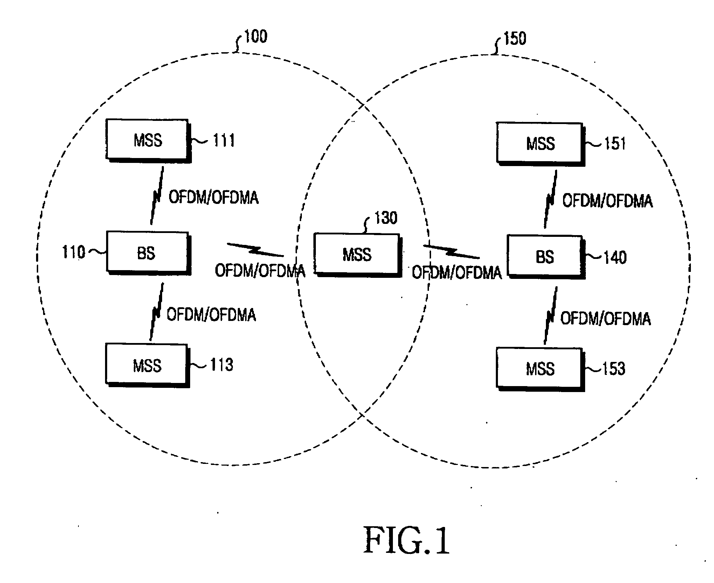

FIG. 1 is a block diagram schematically illustrating the structure of a conventional IEEE 802.16e communication system.

Referring to FIG. 1, the IEEE 802.16e communication system has a multi-cell structure (e.g., a cell 100 and a cell 150). Also, the IEEE 802.16e communication system includes a base station(BS) 110 controlling the cell 100, a BS 140 controlling the cell 150, and a plurality of MSSs 111, 113, 130, 151, and 153. The transmission/reception of signals between the BSs 110 and 140 and the MSSs 111, 113, 130, 151, and 153 is accomplished using an OFDM/OFDMA scheme. Herein, the MSS 130 from among the MSSs 111, 113, 130, 151, and 153 is located in a boundary area (i.e., handover area) between the cell 100 and the cell 150. Accordingly, when the MSS 130 moves into the cell 150 controlled by the BS 140 while transmitting/receiving a signal to/from the BS 110, the serving BS for the MSS 13 0 changes from the BS 110 to the BS 140.

In the IEEE 802.16e communication system reflecting the mobility of MSS, the power consumption of an MSS plays an important part in the performance of the entire system. Therefore, a sleep mode operation and an awake mode operation have been proposed for the BS and the MSS in order to minimize the power consumption of the MSS. Further, in order to cope with a channel state change between the MSS and the BS, the MSS periodically performs ranging for adjusting the timing offset, the frequency offset, and the transmit power between the BS and the MSS. Especially, in the IEEE 802.16e communication system reflecting the mobility of MSS, a periodic ranging from among the ranging as described above emerges as an important issue.

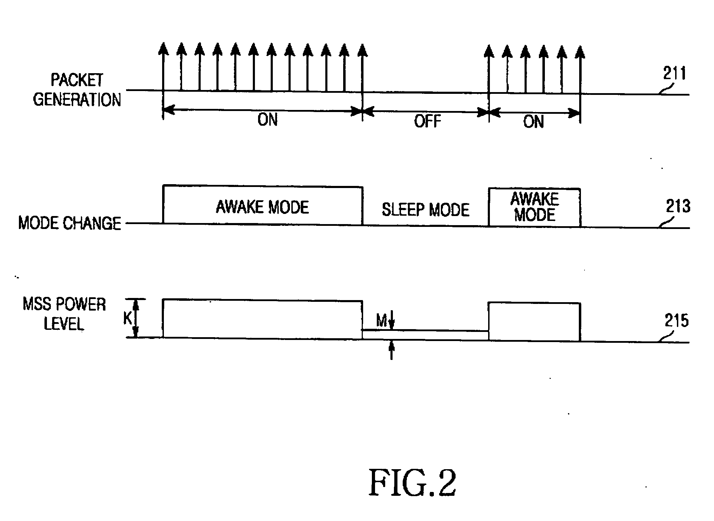

Hereinafter, a sleep mode operation of the IEEE 802.16e communication system will be described with reference to FIG. 2.

FIG. 2 schematically illustrates a sleep mode operation of a conventional IEEE 802.16e communication system.

The sleep mode has been proposed in order to minimize the power consumption of the MSS during the idle interval during which the packet data is not being transmitted. That is, in the idle interval, both the BS and the MSS mode-transit into the sleep mode, thereby minimizing the power consumption of an MSS during the idle interval during which the packet data is not transmitted.

In general, the packet data is transmitted in a burst when generated. Accordingly, it is unreasonable that the same operation is performed in both an interval in which packet data is not transmitted and an interval in which packet data is transmitted. For this reason, the sleep mode operation as described above has been proposed. In contrast, when packet data to be transmitted is generated while the MSS is in the sleep mode, both the BS and the MSS must mode-transit into the awake mode and transmit/receive the packet data.

The sleep mode is also useful for minimizing interference between channel signals as well as the power consumption. However, because the packet data is highly reliable on the traffic state, the sleep mode operation must be performed with consideration given to the traffic characteristic and the transmission scheme characteristic of the packet data.

Referring to FIG. 2, reference numeral 211 illustrates the generation pattern of packet data, which is a plurality of ON and OFF intervals. The ON intervals are burst intervals in which packet data (i.e., traffic) is generated and the OFF intervals are idle intervals in which the traffic is not generated. The MSS and the base station are shifted between the sleep mode and the awake mode according to the traffic generation patterns as described above, so that the power consumption of the MSS can be minimized and interference between channel signals can be prevented.

Reference numeral 213 illustrates the mode change pattern of the BS and the MSS, which includes a plurality of awake modes and sleep modes. In the awake modes, traffic is generated and the MSS and the BS actually transmit/receive packet data. In contrast, in the sleep modes, traffic is not generated and there is no actual transmission/reception of packet data between the MSS and the BS.

Reference numeral 215 illustrates the power level of the MSS. As shown, the power level of the MSS in the awake mode is K and the power level of the MSS in the sleep mode is M. Herein, when the power level K of the MSS in the awake mode is compared with the power level M of the MSS in the sleep mode, it is noted that the value of M is much smaller than the value of K. That is, in the sleep mode, the MSS consumes almost no power since there is no transmission/reception of packet data.

Hereinafter, existing schemes for the IEEE 802.16e communication system in order to support operation in the sleep mode will be described.

First, in order to mode-transit into the sleep mode, the MSS must receive permission for the mode transition from the BS. The BS permits mode transition of the MSS into the sleep mode and transmits a packet data to the MSS. Also, the BS must inform the MSS of existence of packet data to be transmitted during a listening interval of the MSS. Herein, the MSS awakes from the sleep mode and checks whether there exist a packet data to be transmitted from the BS to the MSS. The listening interval will be described below in more detail.

As a result of the checking, when packet data to be transmitted from the BS to the MSS exists, the MSS mode-transits to the awake mode from the sleep mode and receives the packet data from the BS. In contrast, when packet data to be transmitted from the BS to the MSS does not exist, the MSS can stay in the awake mode or can return to the sleep mode.

Hereinafter, parameters necessary in order to support operation in the sleep mode and the awake mode will be described.

### 1) Sleep Identifier (SLPID)

The SLPID proposed by the IEEE 802.16e communication system is a value assigned to the MSS through a sleep response (SLP_RSP) message when the MSS mode-transits into the sleep mode. The SLPIDs are used only for the MSSs staying in the sleep mode. That is, only the MSSs in the sleep mode including the listening interval can use the SLPID. Also, when an MSS having used an SLPID transits back to the awake mode, the SLPID is returned to the BS and can be reused by another MSS which will transit into the sleep mode. The SLPID has a size of 10 bits and thus can identify 1024 MSSs performing the sleep mode operation.

### 2) Sleep Interval

The sleep interval is an interval, which is requested by an MSS and assigned by a BS according to the request of the MSS. The sleep interval represents a time interval during which the MSS maintains a sleep mode from a mode-transition of the MSS into the sleep mode to a beginning of the listening interval. In other words, the sleep interval is defined as an interval during which the MSS stays in the sleep mode.

When there is no data to be transmitted from the BS to the MSS, the MSS may continue to stay in the sleep mode even after the sleep interval is over. In this case, the MSS updates the sleep interval by increasing the sleep interval by means of an initial sleep window value and a final sleep window value set in advance. Herein, the initial sleep window value corresponds to a minimum sleep window value and the final sleep window value corresponds to a maximum sleep window value. Further, the initial sleep window value and the final sleep window value may be expressed by the number of frames. Since the minimum window value and the maximum window will be described in detail below, a further description is omitted here.

The listening interval is an interval, which is requested by an MSS and assigned by a BS according to the request of the MSS. The listening interval represents a time interval from a time point at which the MSS awakens from the sleep mode to a time point at which the MSS synchronizes with the downlink signal of the BS and receives downlink messages such as a traffic indication (TRF_IND) message. Herein, the TRF_IND message is a message representing whether a traffic (i.e., packet data) to be transmitted to the MSS exists. Since the TRF_IND message will be described below, a further detailed description is omitted here.

Throughout the listening interval, the MSS waits for the TRF_IND message. When a bit representing the MSS in a sleep indicator bitmap contained in the TRF_IND message has a value representing a positive indication, the MSS continues to stay in the awake mode, so that the MSS resultantly mode-transits into the awake mode. In contrast, when the bit representing the MSS in a sleep indicator bitmap contained in the TRF_IND message has a value representing a negative indication, the MSS mode-transits into the sleep mode again.

### 3) Sleep Interval Update Algorithm

When the MSS mode-transits into the sleep mode, it determines a sleep interval while regarding a preset minimum window value as a minimum sleep mode interval. After the sleep interval passes, the MSS awakes from the sleep mode for the listening interval and checks for the existence or the absence of packet data to be transmitted from the BS. As a result of the checking, if packet data to be transmitted does not exist, the MSS renews the sleep interval to be twice as long as that of a previous sleep interval and continues to stay in the sleep mode. For example, when the minimum window value is "2", the MSS sets the sleep interval to be 2 frames and stays in the sleep mode during 2 frames. After passage of the 2 frames, the MSS awakes from the sleep mode and determines whether the TRF_IND message has been received. When the TRF_IND message has not been received (that is, when packet data transmitted from the BS to the MSS does not exist), the MSS sets the sleep interval to be 4 frames (twice as many as 2 frames) and stays in the sleep mode during 4 frames. In this way, the sleep interval increases within a range from the initial sleep window value to the final sleep window value. The algorithm for updating the sleep interval as described above is the sleep interval update algorithm.

Hereinafter, messages currently defined in the IEEE 802.16e communication system in order to support operations in the sleep mode and the awake mode will be described.

### 1) Sleep Request (SLP_REQ) Message

The SLP_REQ message refers to a message which is transmitted from an MSS to a BS and used when the MSS requests a mode-transition to the sleep mode. The SLP_REQ message contains parameters (i.e., information elements (IEs)), required when the MSS transits into the sleep mode. Table 1 illustrates the format of the SLP_REQ message.

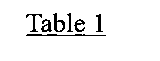

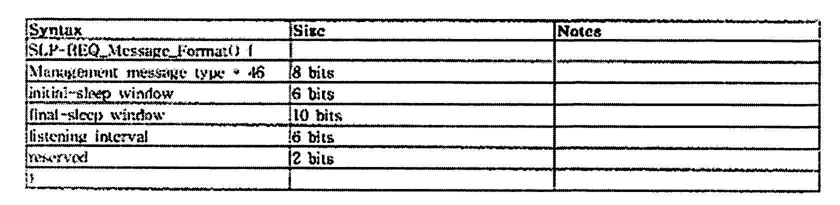

The SLP_REQ message is a dedicated message transmitted based on a connection identifier (CID) of an MSS. The information elements of the SLP_REQ message as illustrated in Table 1 will be described hereinafter.

First, the Management Message Type represents a type of a message being currently transmitted. When the Management Message Type has a value of 45 (Management Message Type = 45), it represents the SLP_REQmessage. The Initial-sleep Window value represents a start value requested for the sleep interval, and the Final-sleep Window value represents a stop value requested for the sleep interval. That is, as described above for the sleep interval update algorithm, the sleep interval may be updated within a range from the initial-sleep window value to the final-sleep window value. The listening interval also can be expressed by frame values.

### 2) Sleep Response(SLP_RSP) Message

The SLP_RSP message is a message in response to the SLP_REQmessage. The SLP_RSP message may be used as a message representing whether to approve or deny the mode-transition into the sleep mode requested by the MSS, or a message representing an unsolicited instruction. The SLP_RSP message contains information elements required when the MSS operates in the sleep mode. Table 2 illustrates the format of the SLP_RSP message.

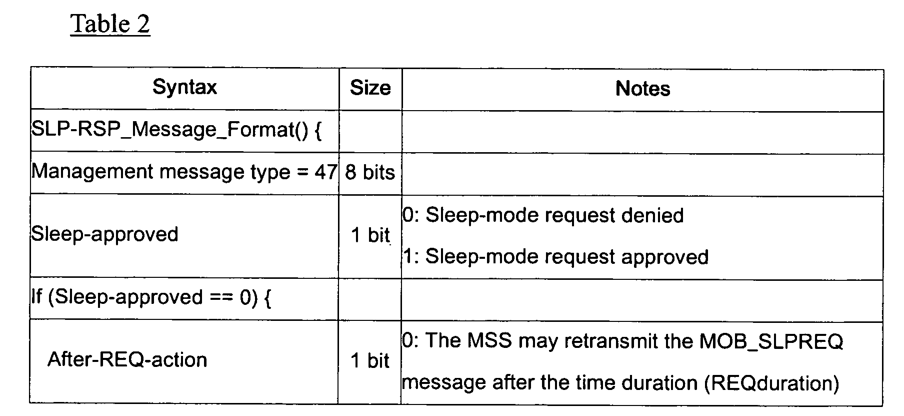

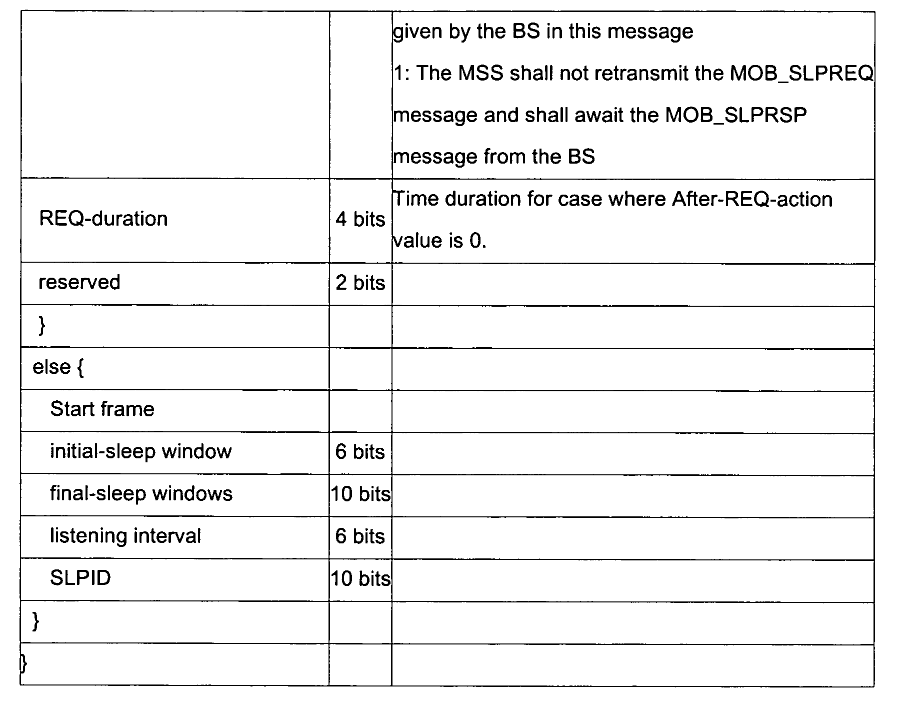

The SLP_RSP message is also a dedicated message transmitted based on the CID of an MSS, and the SLP_RSP message includes information elements as illustrated in Table 2, which will be described hereinafter.

First, the Management Message Type represents a type of a message currently being transmitted. For instance, when the Management Message Type has a value of 46 (Management Message Type = 46), it represents the SLP_RSP message. The the Sleep-approved value is one bit in length. When the Sleep-approved value is equal to 0, it implies that the request for the transition into the sleep mode has been denied. In contrast, when the Sleep-approved value is equal to 1, it implies that the request for the transition into the sleep mode has been approved. When the request of the MSS for the transition into the sleep mode has been denied (e.g., when the Sleep-approved value is set to 0), the MSS either transmits the SLP_REQ message or waits for a SLP_RSP message representing an unsolicited instruction. When the Sleep-approved value is equal to 1, the SLP_RSP message contains values of Start Frame, Initial Sleep Window, Final Sleep Window, Listening Interval, and SLPID as described above. When the Sleep-approved value is equal to 0, the SLP_RSP message contains values of REQ-Action and REQ-Duration.

Here, the value Start Frame refers to the number of frames (not including the frames in which the message has been received) until the MSS shall enter the first sleep interval. That is, the MSS enters a sleep mode after frames corresponding to the start time value have passed from the frame directly after the frame carrying the received SLP_RSP message. The SLPID is used in order to identify MSSs in the sleep mode and can identify 1024 MSSs in the sleep mode.

The Initial Sleep Window represents a start value for the sleep interval (measured in frames). The Listening Interval represents a value for the listening interval (measured in frames). The Final Sleep Window represents a stop value for the sleep interval (measured in frames). The REQ-Action represents an operation which the MSS must do when the request of transition into the sleep mode by the MSS has been denied.

### 3) TRF_IND Message

The TRF_IND message is a message transmitted to an MSS during the listening interval and representing the existence or absence of packet data to be transmitted from a BS to the MSS. Table 3 illustrates the format of the TRF_IND message.

**Table 3**

| Syntax | Size | Notes |
|---|---|---|
| TRF-IND_Message_Format () { | | |
| Management message type = 47 | 8 bits | |
| SLPID bit-map | Variable | |
| } | | |

The TRF_IND message is a broadcasting message transmitted according to the broadcasting method, differently from the SLP_REQ message or the SLP_RSP message. The TRF_IND message is a message representing whether packet data to be transmitted from the BS to an MSS exists. The MSS decodes the broadcasted TRF_IND message during the listening interval and determines whether to mode-transit into the awake mode or to return to the sleep mode.

When the MSS mode-transits into the awake mode, the MSS confirms a frame sync. As a result of the confirmation, when the frame sync does not coincide with a frame sequence number expected by the MSS, the MSS can request retransmission of packet data lost in the awake mode. Meanwhile, when the MSS fails to receive the TRF_IND message during the listening interval or the TRF_IND message received by the MSS does not contain a positive indication, the MSS returns to the sleep mode.

Hereinafter, the information elements of the TRF_IND message as illustrated in Table 3 will be described.

First, the Management Message Type is information representing a type of a message currently being transmitted. For instance, when the Management Message Type has a value of 48 (Management Message Type = 48), it represents the TRF_IND message. The SLPID bit-map represents a set of indication indices having bits which are assigned to SLPIDs (one bit to one SLPID), the SLPIDs being assigned to the MSSs in order to identify the MSSs in the sleep mode. That is, the SLPID bit-map represents a group of bits which are assigned to the SLPIDs (with a maximum value of -1) assigned to the MSSs currently in the sleep mode (one bit to each MSS). The SLPID bit-map may be assigned a dummy bit for byte alignment.

The bit assigned to each MSS represents existence or absence of data to be transmitted from the BS to the MSS. Therefore, the MSS in the sleep mode reads a sleep identifier assigned during the transition into the sleep mode together with a mapped bit from the TRF_IND message received during the listening interval. From the reading, when the sleep identifier has a positive indication value (a value of 1), the MSS maintains the awake mode, thereby resulting in mode-transition into the awake mode. When the sleep identifier has a negative indication value (a value of 0), the MSS mode-transits into the sleep mode.

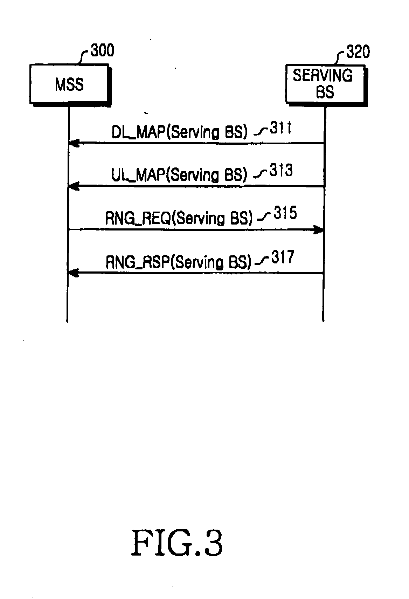

The sleep mode operation of the conventional IEEE 802.16e communication system has been described above with reference to FIG. 2. Hereinafter, a ranging operation of the conventional IEEE 802.16e communication system will be described above with reference to FIG. 3.

FIG. 3 is a signal flow diagram for schematically illustrating a ranging process of a conventional IEEE 802.16e communication system.

Referring to FIG. 3, first, when the MSS 300 is powered on, the MSS 300 monitors all frequency bands set in advance in the MSS 300 and detects a pilot signal having a largest intensity (i.e., a largest Carrier to Interference and Noise Ratio (CINR)). Further, the MSS 300 determines a BS transmitting the pilot signal having the largest CINR as the serving BS 320 which means a BS to which the MSS 300 currently belongs. Then, the MSS 300 receives a preamble of a downlink frame transmitted from the serving BS 320 and acquires a system synch the MSS 300 and the serving BS 320.

When the MSS 300 has acquired the system synch between the MSS 300 and the serving BS 320, the serving BS 320 transmits a downlink(DL)_MAP message and a (uplink(UL)_MAP message to the MSS 300 (steps 311 and 313). Here, the DL_MAP message has a message format as illustrated in Table 4.

**Table 4**

| Syntax | Size | Notes |
|---|---|---|
| DL_MAP_Message_Formal() { | | |
| Management Message Type=2 | 8bits | |
| PHY Synchronization Field | Variable | See Appropriate PHY specification |
| DCD Count | 8bits | |
| Base Station ID | 48bits | |
| Number of DL_MAP Element n | 16bits | |
| Begin PHY Specific section { | | See Applicable PHY section |
| for (i=1; i<=n; i++) | | For each DL_MAP element 1 to n |
| DL_MAP Information Element {} | Variable | See corresponding PHY specification |
| if!(byte boundary) { Padding Nibble | 4bits | Padding to reach byte boundary |
| } | | |
| } | | |
| } | | |
| } | | |

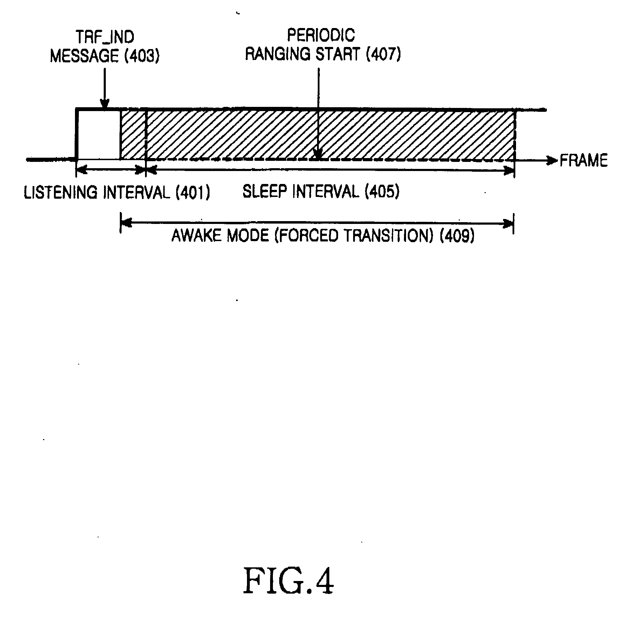

As illustrated in Table 4, the DL_MAP message contains a plurality of IEs, such as Management Message Typerepresenting a type of a message being currently transmitted, PHY synchronization set correspondingly to the modulation scheme and demodulation scheme applied to a physical (PHY) channel for acquisition of synch, DCD count representing a count corresponding to changes in a configuration of a Downlink Channel Descriptor (DCD) message including a downlink burst profile, Base Station ID representing a BS identifier, and Number of DL_MAP Elements n representing the number of the elements following the Base Station ID. Although not shown in FIG. 4, the DL_MAP message contains information about ranging codes allocated to each ranging in the OFDMA communication system. Especially, the MSS 300 can use the DL_MAP message in detecting information about downlink bursts constituting the downlink frame. Therefore, the MSS can receive the data (i.e. data frame) in the bursts by identifying the downlink bursts in the downlink frame.

The UL_MAP message has a message format as illustrated in Table 5.

**Table 5**

| Syntax | Size | Notes |
|---|---|---|
| DL_MAP_Message_Format () { | | |
| Management Message Type=3 | 8bits | |
| Uplink Channel ID | 8bits | |
| CCD Count | 8bits | |
| Number of UL_MAP Element n | 16bits | |
| Allocation Start Time | 32bits | |
| Hegin PHY Specific section { | | See Applicable PHY section |
| for (i=1: i<=n; i++) | | For each UL_NAP element 1 to n |
| UL_MAP_Information_Element () | Variable | See corresponding PHY specification |
| } | | |
| } | | |
| } | | |

As illustrated n in Table 5, the UL_MAP message contains a plurality of IEs, such as Management Message Type representing a type of a message being currently transmitted, Uplink Channel ID representing an uplink channel identifier, UCD count representing a count corresponding to changes in a configuration of an Uplink Channel Descriptor (UCD) message including an uplink burst profile, and Number of UL_MAP Elements n representing the number of the elements following the UCD count. Here, the Uplink Channel ID is assigned only in a Medium access control (MAC)- sublayer.

Meanwhile, after acquiring the synch between the MSS 300 and the serving BS 320, that is, after identifying locations for actual data transmission/reception and downlink/uplink control information, the MSS 300 transmits a ranging request (RNG_REQ) message to the serving BS 320 (step 315). Upon receiving the RNG_REQ message, the serving BS 320 transmits to the MSS 300 a ranging response (RNG_RSP) message including information for updating the frequency, time, and transmit power for the ranging (step 317).

Hereinafter, the ranging can be classified into an initial ranging and a maintenance ranging, that is, a periodic ranging and a bandwidth request ranging. Before transmitting data through an uplink, the MSS can adjust the transmit power and update the timing offset and frequency offset by the ranging.

First, the initial ranging will be described.

The initial ranging is ranging which is performed by the MSS in order to acquire a synch between the BS and the MSS, match the time offset between the BS and the MSS, and adjust the transmit power. That is, after the MSS is powered on, the MSS receives messages including a DL_MAP message and a UL_MAP message and acquires synch between the BS and the MSS. Therefore, the MSS performs the initial ranging in order to adjust the time offset and the transmit power between the BS and the MSS.

Second, the periodic ranging will be described.

The periodic ranging is ranging which is periodically performed by the MSS in order to adjust the channel condition, etc. between the BS and the MSS after adjusting the adjust the time offset and the transmit power between the BS and the MSS through the initial ranging.

Third, the bandwidth request ranging will be described.

The bandwidth request ranging is ranging which is performed by the MSS in order to request allocation of bandwidth necessary for actual communication, after adjusting the adjust the time offset and the transmit power between the BS and the MSS through the initial ranging.

Since the IEEE 802.16e communication system reflects the mobility of the MSS as described above, the periodic ranging by the MSS plays a very important role in ensuring a reliable communication between the BS and the MSS. The periodic ranging is an operation for measuring and updating parameters necessary in order to enable the MSS to reliably communicate with the BS. Therefore, the BS must allocate an uplink resource so that the MSS can perform the periodic ranging, that is, so that the MSS can transmit the ranging request message to the BS. In other words, the BS must allocate an uplink resource to the MSS for the periodic ranging of the MSS and report to the MSS the uplink resource allocation information through the UL_MAP message. Then, the MSS transmits the ranging request message to the BS through the allocated uplink resource and begins to perform the periodic ranging between the BS and the MSS. In response to the ranging request message from the MSS, the BS updates the transmit power, the timing offset, and the frequency offset, and then transmits to the MSS a ranging response message which is a message responding to the ranging request message. Then, the periodic ranging is completed.

However, in the current IEEE 802.16e communication system, the ranging operation (especially, the periodic ranging operation) has been proposed as being independent from the sleep mode operation and having no relation with the sleep mode operation at all. In other words, even an MSS in a sleep mode must perform the periodic ranging in order to perform a reliable communication with the BS. However, the MSS in the sleep mode cannot receive any messages from the BS at all and it is thus impossible for the MSS to receive a resource allocated for the periodic ranging. Therefore, there emerges a necessity for a periodic ranging scheme of an MSS in a sleep mode.

### SUMMARY OF THE INVENTION

Accordingly, the present invention has been made to solve the above-mentioned problems occurring in the prior art, and an object of the present invention is to provide a system and a method for performing periodic ranging in a sleep mode in a broadband wireless access communication system.

In order to accomplish this object, there is provided a method for performing periodic ranging in a broadband wireless access communication system having an awake mode in which data to be transmitted between a mobile subscriber station and a base station exists and the sleep mode in which data to be transmitted between the mobile subscriber station and the base station is non-existent, the sleep mode having a sleep interval and a listening interval, the mobile subscriber station being capable of receiving data in the listening interval and being incapable of receiving data in the sleep interval. The method comprises the steps of reporting, by the base station. to the mobile subscriber station in a listening interval before the sleep interval that the mobile subscriber station must perform the periodic ranging in the sleep interval, when the base station detects that it is necessary for the mobile subscriber station in the sleep mode to perform the periodic ranging at a particular time point in the sleep interval; and receiving, by the mobile subscriber station, the report from the base station in the listening interval, transiting from the sleep mode into the awake mode, and performing the periodic ranging at the particular time point.

In accordance with another aspect of the present invention, there is provided a method for performing periodic ranging in a broadband wireless access communication system having an awake mode in which data to be transmitted between a mobile subscriber station and a base station exists and the sleep mode in which data to be transmitted between the mobile subscriber station and the base station is non-existent, the sleep mode having a sleep interval and a listening interval, the mobile subscriber station being capable of receiving data in the listening interval and being incapable of receiving data in the sleep interval. The method comprises the steps of reporting, by the base station, to the mobile subscriber station in a listening interval before the sleep interval that the mobile subscriber station must perform the periodic ranging after staying in the sleep interval during a predetermined interval from a start point of the sleep interval, when the base station detects that it is necessary for the mobile subscriber station in the sleep mode to perform the periodic ranging at a particular time point in the sleep interval; and receiving, by the mobile subscriber station, the report from the base station in the listening interval, staying in the sleep interval during the predetermined interval, transiting from the sleep mode into the awake mode, and performing the periodic ranging.

In accordance with another aspect of the present invention, there is provided a method for performing periodic ranging in a broadband wireless access communication system having an awake mode in which data to be transmitted between a mobile subscriber station and a base station exists and the sleep mode in which data to be transmitted between the mobile subscriber station and the base station is non-existent, the sleep mode having a sleep interval and a listening interval, the mobile subscriber station being capable of receiving data in the listening interval and being incapable of receiving data in the sleep interval. The method comprises the steps of reporting, by the base station, to the mobile subscriber station in a listening interval before the sleep interval that the mobile subscriber station must perform the periodic ranging and receive control information after staying in the sleep interval during a predetermined interval from a start point of the sleep interval, when the base station detects that it is necessary for the mobile subscriber station in the sleep mode to perform the periodic ranging at a particular time point in the sleep interval and then receive the control information; and receiving, by the mobile subscriber station, the report from the base station in the listening interval, staying in the sleep interval during the predetermined interval, transiting from the sleep mode into the awake mode, performing the periodic ranging, and receiving the control information.

In accordance with another aspect of the present invention, there is provided a method for performing periodic ranging in a broadband wireless access communication system having an awake mode in which data to be transmitted between a mobile subscriber station and a base station exists and the sleep mode in which data to be transmitted between the mobile subscriber station and the base station is non-existent, the sleep mode having a sleep interval and a listening interval, the mobile subscriber station being capable of receiving data in the listening interval and being incapable of receiving data in the sleep interval. The method comprises the steps of detecting that it is necessary for the mobile subscriber station in the sleep mode to perform the periodic ranging at a particular time point in the sleep interval; and reporting to the mobile subscriber station in a listening interval before the sleep interval that the mobile subscriber station must perform the periodic ranging in the sleep interval.

In accordance with another aspect of the present invention, there is provided a method for performing periodic ranging in a broadband wireless access communication system having an awake mode in which data to be transmitted between a mobile subscriber station and a base station exists and the sleep mode in which data to be transmitted between the mobile subscriber station and the base station is non-existent, the sleep mode having a sleep interval and a listening interval, the mobile subscriber station being capable of receiving data in the listening interval and being incapable of receiving data in the sleep interval. The method comprises the steps of detecting that it is necessary for the mobile subscriber station in the sleep mode to perform the periodic ranging at a particular time point in the sleep interval; and reporting to the mobile subscriber station in a listening interval before the sleep interval that the mobile subscriber station must perform the periodic ranging after staying in the sleep interval during a predetermined interval from a start point of the sleep interval.

In accordance with another aspect of the present invention, there is provided a method for performing periodic ranging in a broadband wireless access communication system having an awake mode in which data to be transmitted between a mobile subscriber station and a base station exists and the sleep mode in which data to be transmitted between the mobile subscriber station and the base station is non-existent, the sleep mode having a sleep interval and a listening interval, the mobile subscriber station being capable of receiving data in the listening interval and being incapable of receiving data in the sleep interval. The method comprises the steps of detecting that it is necessary for the mobile subscriber station in the sleep mode to perform the periodic ranging at a particular time point in the sleep interval and then receive control information from the base station; and reporting to the mobile subscriber station in a listening interval before the sleep interval that the mobile subscriber station must perform the periodic ranging and then receive the control information after staying in the sleep interval during a predetermined interval from a start point of the sleep interval.

In accordance with another aspect of the present invention, there is provided a method for performing periodic ranging in a broadband wireless access communication system having an awake mode in which data to be transmitted between a mobile subscriber station and a base station exists and the sleep mode in which data to be transmitted between the mobile subscriber station and the base station is non-existent, the sleep mode having a sleep interval and a listening interval, the mobile subscriber station being capable of receiving data in the listening interval and being incapable of receiving data in the sleep interval. The method comprises the step of receiving a report in a listening interval before the sleep interval that it is necessary to perform together with the base station the periodic ranging after staying in the sleep interval during a predetermined interval from a start point of the sleep interval.

In accordance with another aspect of the present invention, there is provided a method for performing periodic ranging in a broadband wireless access communication system having an awake mode in which data to be transmitted between a mobile subscriber station and a base station exists and the sleep mode in which data to be transmitted between the mobile subscriber station and the base station is non-existent, the sleep mode having a sleep interval and a listening interval, the mobile subscriber station being capable of receiving data in the listening interval and being incapable of receiving data in the sleep interval. The method comprises the step of receiving a report in a listening interval before the sleep interval that it is necessary to perform together with the base station the periodic ranging and then receive the control information after staying in the sleep interval during a predetermined interval from a start point of the sleep interval.

In accordance with another aspect of the present invention, there is provided a system for performing periodic ranging in a broadband wireless access communication system having an awake mode in which data to be transmitted between a mobile subscriber station and a base station exists and the sleep mode in which data to be transmitted between the mobile subscriber station and the base station is non-existent, the sleep mode having a sleep interval and a listening interval, the mobile subscriber station being capable of receiving data in the listening interval and being incapable of receiving data in the sleep interval. The system comprises the base station which reports to the mobile subscriber station in a listening interval before the sleep interval that the mobile subscriber station must perform the periodic ranging in the sleep interval when the base station detects that it is necessary for the mobile subscriber station in the sleep mode to perform the periodic ranging at a particular time point in the sleep interval; and the mobile subscriber station which receives the report from the base station in the listening interval, transits from the sleep mode into the awake mode, and then performs the periodic ranging at the particular time point together with the base station.

In accordance with another aspect of the present invention, there is provided a system for performing periodic ranging in a broadband wireless access communication system having an awake mode in which data to be transmitted between a mobile subscriber station and a base station exists and the sleep mode in which data to be transmitted between the mobile subscriber station and the base station is non-existent, the sleep mode having a sleep interval and a listening interval, the mobile subscriber station being capable of receiving data in the listening interval and being incapable of receiving data in the sleep interval. The system comprises the base station which reports to the mobile subscriber station in a listening interval before the sleep interval that the mobile subscriber station must perform the periodic ranging after staying in the sleep interval during a predetermined interval from a start point of the sleep interval when the base station detects that it is necessary for the mobile subscriber station in the sleep mode to perform the periodic ranging at a particular time point in the sleep interval; and the mobile subscriber station which receives the report from the base station in the listening interval, stays in the sleep interval during the predetermined interval, transits from the sleep mode into the awake mode, and performs the periodic ranging together with the base station.

In accordance with another aspect of the present invention, there is provided a system for performing periodic ranging in a broadband wireless access communication system having an awake mode in which data to be transmitted between a mobile subscriber station and a base station exists and the sleep mode in which data to be transmitted between the mobile subscriber station and the base station is non-existent, the sleep mode having a sleep interval and a listening interval, the mobile subscriber station being capable of receiving data in the listening interval and being incapable of receiving data in the sleep interval. The system comprises the base station which reports to the mobile subscriber station in a listening interval before the sleep interval that the mobile subscriber station must perform the periodic ranging and then receive control information after staying in the sleep interval during a predetermined interval from a start point of the sleep interval when the base station detects that it is necessary for the mobile subscriber station in the sleep mode to perform the periodic ranging at a particular time point in the sleep interval and then receive the control information; and the mobile subscriber station which receives the report from the base station in the listening interval, stays in the sleep interval during the predetermined interval, transits from the sleep mode into the awake mode, performs the periodic ranging together with the base station, and then receives the control information.

### BRIEF DESCRIPTION OF THE DRAWINGS

The above and other objects, features and advantages of the present invention will be more apparent from the following detailed description taken in conjunction with the accompanying drawings, in which:
FIG. 1 is a block diagram schematically illustrating the structure of a conventional IEEE 802.16e communication system;
FIG. 2 schematically illustrates a sleep mode operation of a conventional IEEE 802.16e communication system;
FIG. 3 is a flow diagram for schematically illustrating a ranging process of a conventional IEEE 802.16e communication system;
FIG. 4 is a schematic view for illustrating the periodic ranging scheme of an MSS in the sleep mode in the IEEE 802.16e communication system according to the first embodiment of the present invention;
FIG. 5 is a schematic view for illustrating the periodic ranging of an MSS in the sleep mode in the IEEE 802.16e communication system according to the second embodiment of the present invention;
FIGs. 6A and 6B are flow charts illustrating the operation process of an MSS in the IEEE 802.16e communication system according to the second embodiment of the present invention; and
FIGs. 7A and 7B are flow charts illustrating the operation process of the BS in the IEEE 802.16e communication system according to the second embodiment of the present invention.

### DETAILED DESCRIPTION OF THE PREFERRED EMBODIMENT

Hereinafter, preferred embodiments of the present invention will be described with reference to the accompanying drawings. In the following description, a detailed description of known functions and configurations incorporated herein will be omitted when it may make the subject matter of the present invention unclear.

The present invention proposes a periodic ranging scheme of an MSS in a sleep mode in an IEEE 802.16e communication system, which is a Broadband Wireless Access (BWA) communication system. That is to say, the present invention proposes a scheme for allocating an uplink resource for the periodic ranging even to an MSS in the sleep mode, thereby enabling the MSS to perform the periodic ranging and perform a reliable communication. The IEEE 802.16e communication system is a BWA communication system employing an Orthogonal Frequency Division Multiple Access (OFDMA) scheme, in which physical channel signals are transmitted by a plurality of sub-carriers to achieve high speed data transmission and a multi-cell structure is employed to support the mobility of the MSS. Although the present invention employs the IEEE 802.16e communication system as an embodiment thereof, it goes without saying that the present invention can be applied to any communication system supporting the sleep mode operation and the periodic ranging operation.

### First Embodiment

The first embodiment of the present invention proposes a periodic ranging scheme of an MSS in the sleep mode, which employs a traffic indication (TRF_IND) message using the conventional format of the IEEE 802.16e communication system. That is, in the periodic ranging scheme of an MSS according to the first embodiment of the present invention, when the MSS in the sleep mode is controlled to perform the periodic ranging, the BS forcibly sets a SLPID bit for the MSS as a positive indication, the SLPID bit representing the MSS in an SLPID bitmap of a traffic indication message broadcasted by the BS during the listening interval before the beginning of the sleep interval.

Hereinafter, the periodic ranging scheme of an MSS in the sleep mode in the IEEE 802.16e communication system according to the first embodiment of the present invention will be described with reference to FIG. 4.

FIG. 4 is a schematic view for illustrating the periodic ranging scheme of an MSS in the sleep mode in the IEEE 802.16e communication system according to the first embodiment of the present invention.

Since the MSS is in the sleep mode, the MSS receives the traffic indication message broadcasted from the BS (while repeatedly experiencing the listening interval and the sleep interval) and determines whether data targeting the MSS will be transmitted from the BS. As described above in relation to the prior art, in the conventional IEEE 802.16e communication system, when there is no data to be transmitted targeting the MSS, the sleep identifier bit representing the MSS in the sleep identifier bitmap contained in the traffic indication message is set as a negative indication. However, according to the first embodiment of the present invention, if it is necessary for the MSS to perform the periodic ranging while the MSS is in the sleep mode (especially in the sleep interval), even when there is no data to be transmitted targeting the MSS, the sleep identifier bit representing the MSS in the sleep identifier bitmap contained in the traffic indication message is set as a positive indication and transmitted during the listening interval before the beginning of the periodic ranging.

Here, the sleep identifier bit representing the MSS is set as a positive indication is in order to enable the MSS to receive the UL_MAP message from the BS for the periodic ranging and recognize the uplink resource allocation information even when there isn't any actual data which the MSS must receive. That is, by transmitting the sleep identifier bit representing the MSS as a positive indication, the BS forces the MSS to stay in the listening interval instead of returning to the sleep interval from the listening interval. Then, the MSS receives the traffic indication message and is forced to mode-transit from the sleep mode to the awake mode, so that the MSS can perform the periodic ranging between the BS and the MSS.

While the MSS performs the periodic ranging, that is, while the MSS transmits a ranging request (RNG_REQ) message to the BS and then receives a ranging response (RNG_RSP) message responding to the RNG_REQ message, the MSS cannot transit into the sleep mode. Therefore, in order to transit into the sleep mode, the MSS must receive either the RNG_RSP message responding to the RNG_REQ message or a sleep response message of an unsolicited instruction type from the BS.

Referring to FIG. 4, because the MSS can operate in the sleep mode, the MSS receives the TRF_IND message 403 broadcasted from the BS in the listening interval 401. Here, the MSS must start the periodic ranging 407 with the BS in the sleep interval 405 after the listening interval 401. For the beginning of the periodic ranging 407, the BS marks a positive indication on the SLPID bit representing the MSS in the SLPID bitmap contained in the TRF_IND message 403 and broadcasts the marked SLPID bit in the listening interval 401.

Upon receiving the TRF_IND message 403, the MSS transits into the awake mode 409 instead of returning to the sleep interval 405, based on the positive indication of the SLPID bits for the MSS in the TRF_IND message. In the awake mode 409, the MSS performs the periodic ranging between the BS and the MSS.

### Second Embodiment

The second embodiment of the present invention proposes a periodic ranging scheme of an MSS in the sleep mode, which employs a TRF_IND message using a format different from the conventional format of the IEEE 802.16e communication system.

In the periodic ranging scheme of an MSS according to the first embodiment of the present invention, when the MSS in the sleep mode must perform the periodic ranging, the BS transmits a TRF_IND message in the listening interval before the beginning of the sleep interval so that the MSS can transits into the awake mode. However, as described above in relation to the prior art, the sleep interval according to the sleep interval update algorithm is set as a relatively long interval, power may be unnecessarily consumed because the MSS must maintain the awake mode before starting the periodic ranging. Therefore, the second embodiment of the present invention proposes a TRF_IND message format as illustrated in Table 6 in order to prevent unnecessary power consumption caused by maintaining the awake mode for the periodic ranging.

**Table 6**

| **Syntax** | **Size** | **Notes** |
|---|---|---|
| TRF-IND_Message_Format() { | | |
| Management message type = 47 | 8 bits | |
| Byte of SLPID bit-map | | |
| SLPID bit-map with Padding | Variable | the 2 bit are allocated for MSS as SLPID respectively byte-alignment |
| NUM_of_MSS_Periodic_Ranging | 8 bit | |
| For(i=0; i<NUM_of_Periodic_Ranging; i++) { | | |
| Frame Offset of Awake for Periodic Ranging | 10bit | [Frame] |
| } | | |
| Padding | Variable | |
| } | | |

As illustrated in Table 6, the TRF_IND message proposed by the second embodiment of the present invention uses an SLPID bitmap representing MSSs in the sleep mode. However, in the TRF_IND message proposed by the second embodiment of the present invention, as compared to the TRF_IND message of the conventional IEEE 802.16e communication system, two SLPID bits are allocated to each MSS in order to identify operations which must be performed by the MSS during the listening interval. Here, the two SLPID bits are called "SLPID bit pair".

Hereinafter, Information Elements (IEs) of the TRF_IND message as illustrated in Table 6 will be described.

First, the Management Message Type is information representing a type of a message currently being transmitted. For instance, when the Management Message Type has a value of 47 (Management Message Type = 47), it represents the TRF_IND message. The Byte of the SLPID bit-map represents the number of bytes of the SLPID bitmap. The SLPID bitmap represents SLPID bit pairs of the MSSs in the sleep mode. From among the two bits of each SLPID bit pair, the preceding bit represents whether or not the MSS must perform the periodic ranging (the bit set as a positive indication represents that the MSS must perform the periodic ranging, while the bit set as a negative indication represents that the MSS needs not perform the periodic ranging), and the following bit represents existence (or absence of) data targeting the MSS. Here, as is in the prior art, the SLPID bitmap may be padded with a dummy bit for byte alignment. The padding implies addition of a dummy bit in order to solve the byte alignment problem which may be caused by the awake frame offset having a size of 10 bits, and the awake frame offset will be described later in detail. The number of the periodic ranging of the MSS (NUM_of_MSS_Periodic Ranging) represents the number of MSSs which must transit into the next sleep interval and perform the periodic ranging from among MSSs currently receiving the TRF_IND message in the current listening interval.

The awake frame offset (Frame Offset of Awake for Periodic Ranging) represents a frame in the sleep interval at which the MSS must awake in order to perform the periodic ranging. Here, the awake frame offset has a size of 10 bits since it may have the same size as that of a maximum sleep interval (i.e., maximum window) in which the MSS can stay, and the value of the awake frame offset represents the number of frames from the start frame of the sleep interval to the start frame of the periodic ranging (i.e., the frame at which the periodic ranging starts). For example, when the awake frame offset has a value of 10, the MSS must transit into the awake mode at the 2^{nd} frame of the sleep interval in order to start the periodic ranging. Here, if the MSS receives a TRF_IND message representing the negative indication during the listening interval, the MSS can transit back into the sleep mode even before the listening interval is ended. The transition into the sleep mode in this case is not include in the value of the awake frame offset.

Hereinafter, the SLPID bit pair will be described.

First, the SLPID bit pair includes 2 bits representing different information as described above.

(2 bits) = (necessity to perform the periodic ranging or not : existence or absence of traffic). Herein, the first bit of 2 bits represents an information of necessity to perform the periodic ranging or not, and the second bit of 2 bits represents an information of existence or absence of traffic.

In the SLPID bit pair, the preceding bit represents whether the MSS must perform the periodic ranging. When the preceding bit has been set as 1, it represents that it is necessary to perform the periodic ranging in the following sleep interval. Then, the MSS must read the awake frame offset value and perform a corresponding operation.

In the SLPID bit pair, the following bit represents various meanings according to the value of the preceding bit. Specifically, when the preceding bit is marked as 0, that is, when the preceding bit represents that it is unnecessary to perform the periodic ranging in the following sleep interval, the following bit has the same meaning as that of the SLPID bit of a conventional IEEE 802.16e communication system. That is, when the following bit is marked as 1, it means that traffic exists (i.e., data exists) targeting the MSS, so the MSS must transit into the awake mode. In contrast, when the following bit is marked as 0, it means that there exists no traffic targeting the MSS, so the MSS must continue to stay in the sleep mode.

However, when the preceding bit is marked as 1, that is, when the preceding bit represents that it is necessary to perform the periodic ranging in the following sleep interval, the following bit marked as 0 represents that the MSS must transit again into the sleep mode after completing the periodic ranging in the next sleep mode while the following bit marked as 1 represents that the MSS must maintain the awake mode and receive the traffic transmitted from the BS.

After the periodic ranging between the BS and the MSS, when the BS has a Medium Access Control (MAC) management message to additionally transmit to the MSS or when the MSS needs to receive the MAC management message broadcasted by the BS, the BS marks 1 on both the preceding bit and 1 on the following bit in the transmitted SLPID bit pair. For example, when the MSS must perform the periodic ranging during the sleep interval and receive a MAC management message such as a Uplink Channel Descriptor(UCD) message containing UCD information changed through the periodic ranging, the BS marks 11 (binary) on the SLPID bit pair and then transmits it.

The MSS having received the TRF_IND message containing the SLPID bit pair marked as 11 must stay in the awake mode and receive the control information (i.e., a MAC management message) from the BS even after completing the periodic ranging. In contrast, when the BS has no control information to transmit to the MSS, the BS marks 10 on the SLPID bit pair and transmits it.

Hereinafter, the operations of the MSS according to the values of the SLPID bit pair will be described.

### 1) In the case where the SLPID bit pair is marked as 00

Because the preceding bit of the SLPID bit pair is 0, this case is equivalent to the case where the SLPID bit of the TRF_IND message of the conventional IEEE 802.16e communication system is marked as a negative indication. Therefore, the MSS stays in the sleep mode during the sleep interval by the sleep interval update algorithm.

### 2) In the case where the SLPID bit pair is marked as 01

Because the preceding bit of the SLPID bit pair is 0, this case is equal to the case where the SLPID bit of the TRF_IND message of the conventional IEEE 802.16e communication system is marked as a positive indication. Therefore, the MSS transits from the sleep mode into the awake mode.

### 3) In the case where the SLPID bit pair is marked as 10

Because the preceding bit of the SLPID bit pair is 1, the MSS returns to the sleep interval during the sleep interval increased by the sleep interval update algorithm. However, the MSS must perform the periodic ranging during the sleep interval, so the MSS must temporarily transit into the awake mode at the frame from which the periodic ranging begins, that is, at the frame at which the UL_MAP message allocated an uplink resource (i.e., an uplink burst) for the periodic ranging of the MSS by the BS is transmitted. Therefore, the MSS must read the awake frame offset value of the TRF_IND message.

Specifically, the MSS reads the SLPID bit map of the TRF_IND message and detects the ordinal number of the MSS itself from among the MSSs each of which is assigned an SLPID bit pair having a preceding bit marked as 1. That is, each of the MSSs assigned an SLPID bit pair marked as 10 or 11 must detect its own ordinal number from among the MSSs. For example, if there are M number of MSSs each of which is assigned an SLPID bit pair having a preceding bit marked as 1 in total, the K-th MSS from among the M number of MSSs must the K-th awake frame offset from among the total M awake frame offsets located after the SLPID bitmap.

The MSS stays in the sleep mode during the interval corresponding to the detected awake frame offset and then temporarily transits into the awake mode for the periodic ranging. Further, since the following bit of the SLPID bit pair assigned to the MSS is marked as 0, the MSS transits again into the sleep mode after completing the periodic ranging. If the periodic ranging is performed up to the time point at which the sleep interval is ended, the MSS must operate following a received next TRF_IND message during the listening interval.

### 4) In the case where the SLPID bit pair is marked as 11

In the case where the SLPID bit pair is marked as 11, the MSS operates nearly the same as in the case where the SLPID bit pair is marked as 10. The only difference is that the MSS maintains the awake mode even after completing the periodic ranging in the present case.

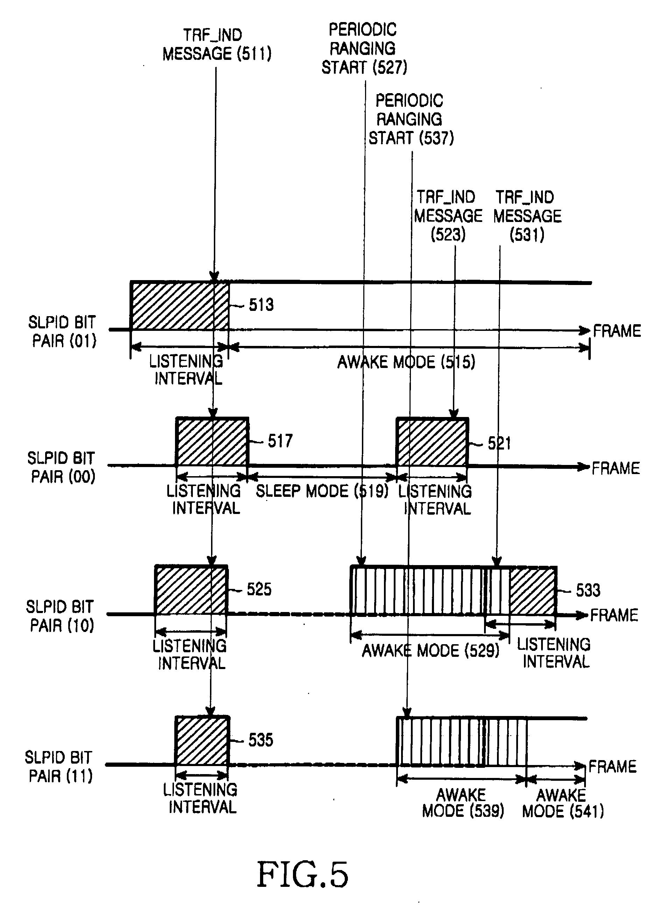

Hereinafter, the periodic ranging of an MSS in the sleep mode in the IEEE 802.16e communication system according to the second embodiment of the present invention will be described with reference to FIG. 5.

FIG. 5 is a schematic view for illustrating the periodic ranging of an MSS in the sleep mode in an IEEE 802.16e communication system according to the second embodiment of the present invention.

Before describing FIG. 5, it is assumed that four MSSs are in the sleep mode within an area controlled by one BS and the four MSSs receive TRF_IND messages containing SLPID bit pairs marked as 00, 01, 10, and 11 (binary), respectively. Initially, the four MSSs receive TRF_IND messages 511 transmitted from the BS.

First, an MSS having received a TRF_IND message containing an SLPID bit pair marked as 01 during the listening interval 513 transits into the awake mode 515, since it operates in the same way as in the case where the SLPID bit of the TRF_IND message of the conventional IEEE 802.16e communication system is marked as a positive indication as described above.

Second, an MSS having received a TRF_IND message containing an SLPID bit pair marked as 00 during the listening interval 517 transits back into the sleep mode 519, since it operates in the same way as in the case where the SLPID bit of the TRF_IND message of the conventional IEEE 802.16e communication system is marked as a negative indication as described above. Further, the MSS performs continuous sleep mode operation and receives a TRF_IND message 523 broadcasted from the BS during another listening interval 521.

Third, an MSS having received a TRF_IND message 511 containing an SLPID bit pair marked as 10 during the listening interval 525 recognizes necessity to perform the periodic ranging in the sleep interval after the listening interval 525 and performs the corresponding operation by detecting an awake frame offset of the TRF_IND message 511. Specifically, since the MSS is the first MSS from among MSSs each of which is assigned an SLPID bit pair having a preceding bit marked as 1 among MSSs in the sleep mode within the boundary of the BS, the MSS detects the first awake frame offset of the TRF_IND message 511. Then, the MSS calculates based on the detected awake frame offset the frame at which the MSS must awake in the next sleep interval, and then transits into the awake mode 529 in order to start the periodic ranging 527 in the corresponding frame. However, since the periodic ranging is completed after the next sleep interval, the MSS must receive the TRF_IND message 531 transmitted from the BS. Although the MSS must transit into the sleep mode following the TRF_IND message 511 which the MSS has previously received, the MSS must perform next operation corresponding to the SLPID bitpair of the TRF_IND message 511 because the MSS already is within the listening interval 533.

Fourth, an MSS having received a TRF_IND message 511 containing an SLPID bit pair marked as 11 during the listening interval 535 recognizes necessity to perform the periodic ranging in the sleep interval after the listening interval 535 and performs the corresponding operation by detecting an awake frame offset of the TRF_IND message 511. Specifically, since the MSS is the second MSS from among MSSs each of which is assigned an SLPID bit pair having a preceding bit marked as 1 among MSSs in the sleep mode within the boundary of the BS, the MSS detects the second awake frame offset of the TRF_IND message 511. Then, the MSS calculates based on the detected awake frame offset the frame at which the MSS must awake in the next sleep interval, and then transits into the awake mode 539 in order to start the periodic ranging 537 in the corresponding frame. After completing the periodic ranging, the MSS continues to stay in awake mode 541 since the following bit of the SLPID bit pair is marked as 1.

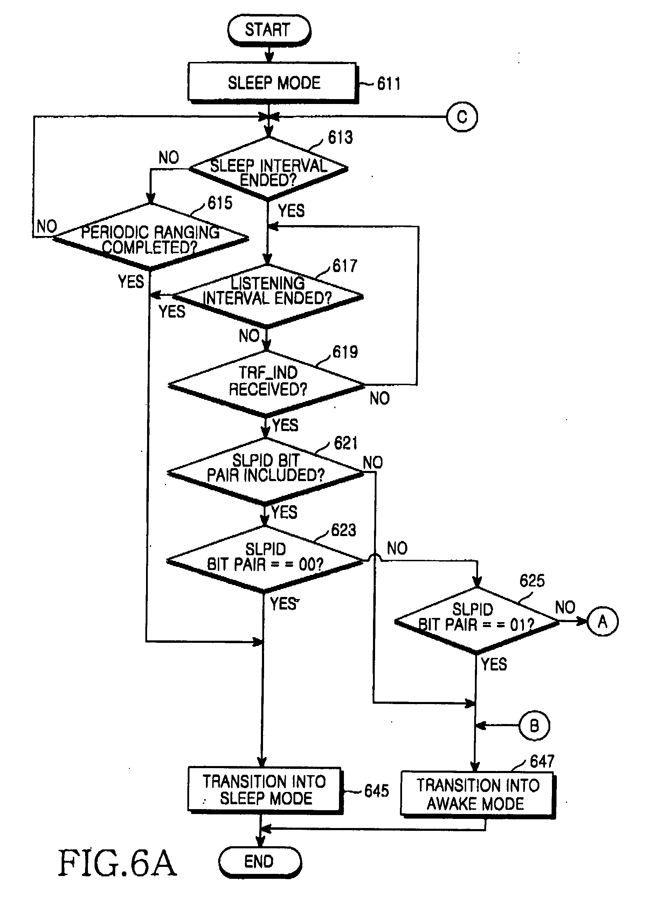

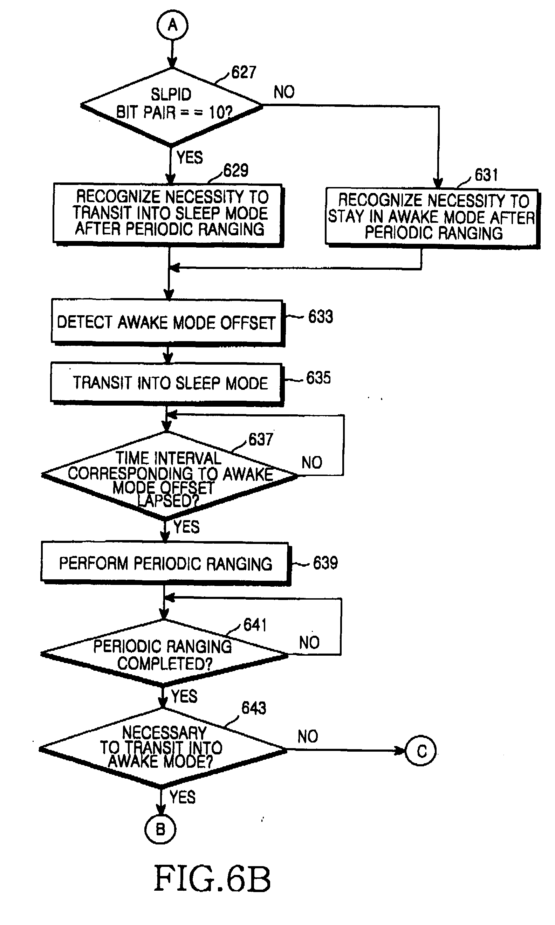

Next, the operation process of an MSS in the IEEE 802.16e communication system according to the second embodiment of the present invention will be described with reference to FIGs. 6A and 6B.

FIGs. 6A and 6B are flow diagrams illustrating the operation process of an MSS in an IEEE 802.16e communication system according to the second embodiment of the present invention.

First, in step 611, the MSS performs the sleep mode operation. In step 613, the MSS checks whether the sleep interval is ended. As a result of the checking, when the sleep interval is not ended, the MSS proceeds to step 615. In step 615, while still in the sleep interval, the MSS examines whether the periodic ranging has been performed. As a result of the examination, when it is concluded that the MSS has not performed the periodic ranging within the sleep interval, that is, when the MSS is performing a conventional sleep mode operation without performing the periodic ranging, the MSS returns to step 613 in order to continuously perform the sleep mode operation until the sleep interval is ended. In contrast, as a result of the examination, when it is concluded that the MSS has already completed the periodic ranging within the sleep interval, that is, when the MSS has completed the periodic ranging before the sleep interval completely lapses in a state where the MSS has been ordered to return to the sleep mode after completing the periodic ranging in step 643, the MSS proceeds to step 645 and prevents power consumption during the remaining sleep interval. That is, in 645, the MSS transits into the sleep mode and then terminates the process.

Meanwhile, as a result of the checking in step 613, when the sleep interval is ended, the MSS proceeds to step 617. In step 617, the MSS checks whether the listening interval is ended. As a result of the checking, when the listening interval is ended, the MSS proceeds to step 645. As a result of the checking in step 617, when the listening interval is not ended yet, the MSS proceeds to step 619. In step 619, the MSS checks whether a TRF_IND message from the BS has been received. As a result of the checking, if a TRF_IND message from the BS has not been received, the MSS returns to step 617.

As a result of the checking in step 619, when a TRF_IND message from the BS has been received, the MSS proceeds to step 621. In step 621, the MSS checks whether the received TRF_IND message contains a SLPID bit pair indicating the MSS. As a result of the checking, when the TRF_IND message does not contain the SLPID bit pair indicating the MSS, the MSS proceeds to step 647. Here, the fact that the TRF_IND message does not contain the SLPID bit pair indicating the MSS implies that the synch for information does not coincide between the MSS and the BS. In step 647, the MSS transits into the awake mode and then terminates the process.

As a result of the checking in step 621, when the TRF_IND message contains the SLPID bit pair indicating the MSS, the MSS proceeds to step 623. In step 623, the MSS checks whether the SLPID bit pair is marked as 00. As a result of the checking, when the SLPID bit pair is marked as 00, the MSS proceeds to step 645. When the SLPID bit pair is not marked as 00, the MSS proceeds to step 625. In step 625, the MSS checks whether the SLPID bit pair is marked as 01. When the SLPID bit pair is marked as 01, the MSS proceeds to step 647.

As a result of the checking in step 625, when the SLPID bit pair is not marked as 01, the MSS proceeds to step 627. In step 627, the MSS checks whether the SLPID bit pair is marked as 10. When the SLPID bit pair is not marked as 10, that is, when the SLPID bit pair is marked as 11, the MSS proceeds to step 631. In step 631, the MSS recognizes that it is necessary to perform the periodic ranging in the next sleep interval since the SLPID bit pair is marked as 11 and that the MSS must stay in the awake mode after performing the periodic ranging since traffic targeting the MSS exists, and then the MSS proceeds to step 633.

As a result of the checking in step 627, when the SLPID bit pair is marked as 10, the MSS proceeds to step 629. In step 629, the MSS recognizes that it is necessary to perform the periodic ranging in the next sleep interval since the SLPID bit pair is marked as 10 and that the MSS must transit into the sleep mode after performing the periodic ranging since traffic targeting the MSS does not exist, and then the MSS proceeds to step 633.

In step 633, the MSS detects awake mode offset corresponding to the MSS in the TRF_IND message. In step 635, the MSS transits into the sleep mode. In step 637, the MSS checks whether a time interval corresponding to the awake mode offset has lapsed. As a result of the checking, when a time interval corresponding to the awake mode offset has lapsed, the MSS proceeds to step 639. In step 639, the MSS performs the periodic ranging between the BS and the MSS. In step 641, the MSS checks whether the periodic ranging has been completed. As a result of the checking, when the periodic ranging has been completed, the MSS proceeds to step 643.

In step 643, the MSS checks whether the MSS must transit into the awake mode. Here, whether or not the MSS must transit into the awake mode after performing the periodic ranging can be determined using the SLPID bit pair value contained in the TRF_IND message. That is, in determining whether the MSS must transit into the awake mode, the MSS depends on the result of the checking in step 629 or step 631. As a result of the checking in step 643, when the MSS does not have to switch into the awake mode, the MSS returns to step 613. Alternatively, if the MSS must switch into the awake mode, the MSS proceeds to step 647.

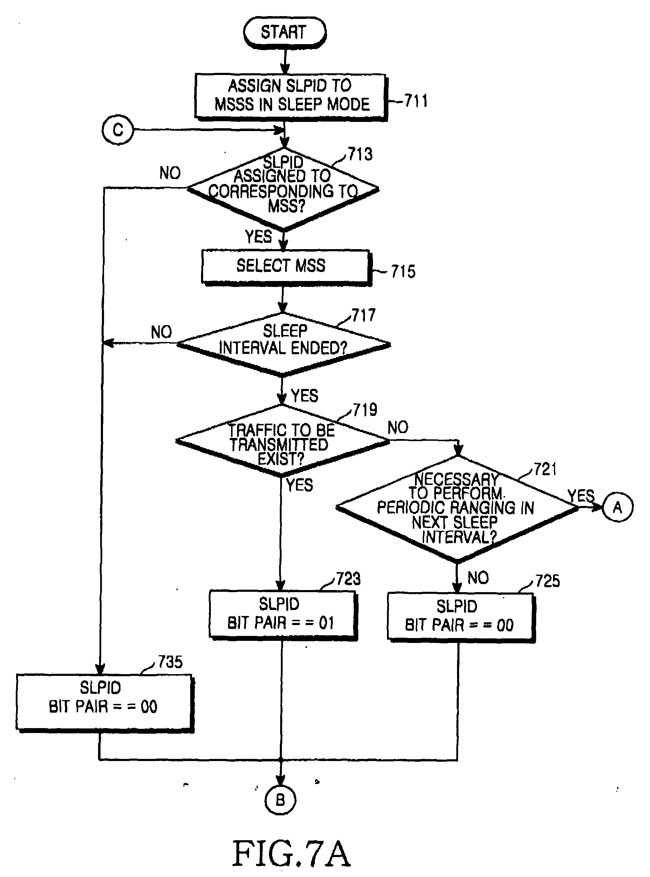

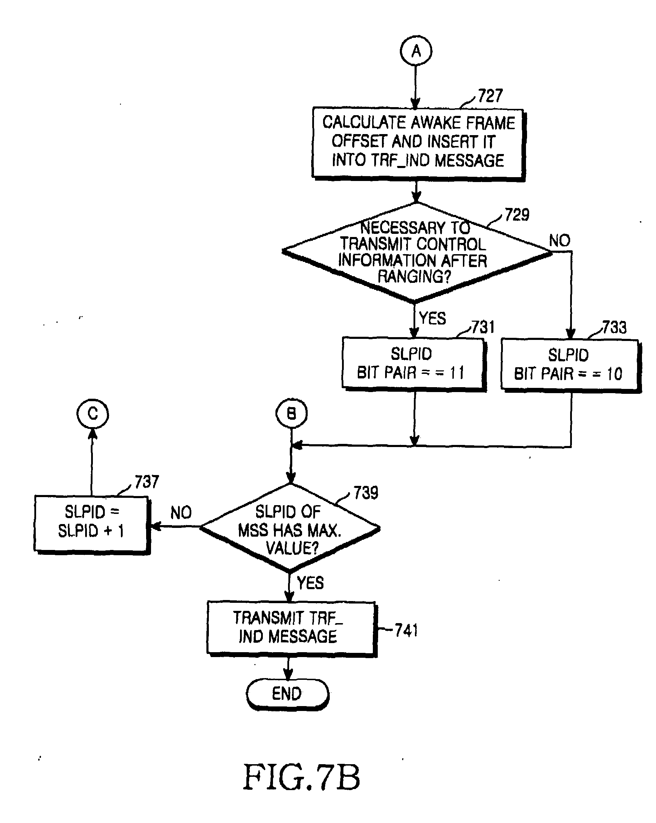

The above description with reference to FIGs. 6A and 6B is given of the operation process of an MSS in the IEEE 802.16e communication system according to the second embodiment of the present invention. Now, the operation process of the BS in the IEEE 802.16e communication system according to the second embodiment of the present invention will be described with reference to FIGs. 7A and 7B.

FIGs. 7A and 7B are a flow diagrams illustrating the operation process of the BS in an IEEE 802.16e communication system according to the second embodiment of the present invention.

Referring to FIGs. 7A and 7B, in step 711, the BS sets two bits mapped to an SLPID to be allocated to a corresponding MSS, in order to constitute a single TRF_IND message containing instruction about operations which all MSSs in the sleep mode must perform, that is, in order to constitute a single TRF_IND message to be transmitted to said all MSSs in the sleep mode (here, the BS may perform the setting of two bits from SLPID 1 and the TRF_IND message is completely constituted when the BS has performed the setting of two bits for all SLPIDs from SLPID 1). In step 713, the BS checks whether the SLPID has been allocated to the corresponding MSS. When the SLPID has not been allocated to the corresponding MSS, it implies that the corresponding MSS having been using the SLPID has already transited into the awake mode, that the SLPID is now an unused SLPID which is available for another MSS which will transit into the sleep mode, and that the two bits have meaningless values, so the BS proceeds to step 735. In step 735, the BS marks 00 on an SLPID bit pair targeting the corresponding MSS in the SLPID bitmap of the TRF_IND message and proceeds to step 739.

As a result of the checking in step 713, when the SLPID has been allocated to the corresponding MSS, that is, when there is an MSS using the SLPID, the BS proceeds to step 715. In step 715, the BS selects the corresponding MSS allocated the SLPID and proceeds to step 717. In step 717, the BS checks whether the sleep interval of the selected MSS has ended. As a result of the checking, when the sleep interval of the selected MSS has not ended yet, the BS proceeds to step 735. In contrast, when the sleep interval of the selected MSS has ended, the BS proceeds to step 719. In step 719, the BS checks whether traffic to be transmitted to the selected MSS exists. If traffic to be transmitted to the selected MSS exists, the BS proceeds to step 723. In step 723, the BS marks 01 on an SLPID bit pair targeting the selected MSS in the SLPID bitmap of the TRF_IND message and proceeds to step 739.

As a result of the checking in step 719, if traffic to be transmitted to the selected MSS does not exist, the BS proceeds to step 721. In step 721, the BS checks whether the MSS must perform the periodic ranging in the next sleep interval. As a result of the checking, when the MSS need not perform the periodic ranging in the next sleep interval, the BS proceeds to step 725. In step 725, the BS marks 00 on the SLPID bit pair targeting the selected MSS in the SLPID bitmap of the TRF_IND message and proceeds to step 739.

As a result of the checking in step 721, when the MSS must perform the periodic ranging in the next sleep interval, the BS proceeds to step 727. In step 727, the BS calculates the awake frame offset for the periodic ranging in the next sleep interval and inserts the calculated awake frame offset in the SLPID bitmap of the TRF_IND message. In step 729, the BS checks whether the BS must transmit additional control information (i.e., MAC message) to the MSS after the periodic ranging between the BS and the MSS. When it is necessary to transmit additional control information, the BS proceeds to step 731. In step 731, the BS marks 11 on the SLPID bit pair targeting the MSS in the SLPID bitmap of the TRF_IND message and proceeds to step 739. In contrast, if it is unnecessary to transmit additional control information, the BS proceeds to step 733. In step 733, the BS marks 10 on the SLPID bit pair targeting the MSS in the SLPID bitmap of the TRF_IND message and proceeds to step 739.

In step 739, the BS checks whether the SLPID of the MSS has a maximum value from among the values which the BS can allocate. When the SLPID of the MSS does not have the maximum value, the BS proceeds to step 737. In step 737, the BS increases the SLPID by 1 (SLPID = SLPID +1), and then returns to step 713 in order to set two bits to be mapped to an SLPID for operation of a next MSS. As a result of the checking in step 739, when the SLPID of the MSS does has the maximum value, which implies that there are no more bit pair to be set for operation of another MSS, the BS proceeds to step 741. In step 741, the BS transmits the TRF_IND message to the corresponding MSS and ends the process.

The present invention as described above can simultaneously support the periodic ranging together with sleep mode and awake mode operations of a broadband wireless access communication system employing an OFDM/OFDMA scheme, such as an IEEE 802.16e communication system. Moreover, the present invention supports the periodic ranging of an MSS in the sleep mode in an IEEE 802.16e communication system, thereby providing a reliable communication with minimum power consumption while guaranteeing backward compatibility. As a result, the present invention can provide a communication with an improved service quality.

While the invention has been shown and described with reference to certain preferred embodiments thereof, it will be understood by those skilled in the art that various changes in form and details may be made therein without departing from the spirit and scope of the invention as defined by the appended claims.

## Claims

1. A method for performing periodic ranging in a broadband wireless access communication system having an awake mode in which data to be transmitted between a mobile subscriber station and a base station exists and the sleep mode in which data to be transmitted between the mobile subscriber station and the base station is non-existent, the sleep mode having a sleep interval and a listening interval, the mobile subscriber station being capable of receiving data in the listening interval and being incapable of receiving data in the sleep interval, the method comprising the steps of:
reporting, by the base station. to the mobile subscriber station in a listening interval before the sleep interval that the mobile subscriber station must perform the periodic ranging in the sleep interval, when the base station detects that it is necessary for the mobile subscriber station in the sleep mode to perform the periodic ranging at a particular time point in the sleep interval; and
receiving, by the mobile subscriber station, the report from the base station in the listening interval, transiting from the sleep mode into the awake mode, and performing the periodic ranging at the particular time point.

2. A method for performing periodic ranging in a broadband wireless access communication system having an awake mode in which data to be transmitted between a mobile subscriber station and a base station exists and the sleep mode in which data to be transmitted between the mobile subscriber station and the base station is non-existent, the sleep mode having a sleep interval and a listening interval, the mobile subscriber station being capable of receiving data in the listening interval and being incapable of receiving data in the sleep interval, the method comprising the steps of:
reporting, by the base station, to the mobile subscriber station in a listening interval before the sleep interval that the mobile subscriber station must perform the periodic ranging after staying in the sleep interval during a predetermined interval from a start point of the sleep interval, when the base station detects that it is necessary for the mobile subscriber station in the sleep mode to perform the periodic ranging at a particular time point in the sleep interval; and
receiving, by the mobile subscriber station, the report from the base station in the listening interval, staying in the sleep interval during the predetermined interval, transiting from the sleep mode into the awake mode, and performing the periodic ranging.

3. The method as claimed in claim 2, further comprising the step of transiting into the sleep mode after performing the periodic ranging by the mobile subscriber station.

4. A method for performing periodic ranging in a broadband wireless access communication system having an awake mode in which data to be transmitted between a mobile subscriber station and a base station exists and the sleep mode in which data to be transmitted between the mobile subscriber station and the base station is non-existent, the sleep mode having a sleep interval and a listening interval, the mobile subscriber station being capable of receiving data in the listening interval and being incapable of receiving data in the sleep interval, the method comprising the steps of:
reporting, by the base station, to the mobile subscriber station in a listening interval before the sleep interval that the mobile subscriber station must perform the periodic ranging and receive control information after staying in the sleep interval during a predetermined interval from a start point of the sleep interval, when the base station detects that it is necessary for the mobile subscriber station in the sleep mode to perform the periodic ranging at a particular time point in the sleep interval and then receive the control information; and
receiving, by the mobile subscriber station, the report from the base station in the listening interval, staying in the sleep interval during the predetermined interval, transiting from the sleep mode into the awake mode, performing the periodic ranging, and receiving the control information.

5. A method for performing periodic ranging in a broadband wireless access communication system having an awake mode in which data to be transmitted between a mobile subscriber station and a base station exists and the sleep mode in which data to be transmitted between the mobile subscriber station and the base station is non-existent, the sleep mode having a sleep interval and a listening interval, the mobile subscriber station being capable of receiving data in the listening interval and being incapable of receiving data in the sleep interval, the method comprising the steps of:
detecting that it is necessary for the mobile subscriber station in the sleep mode to perform the periodic ranging at a particular time point in the sleep interval; and
reporting to the mobile subscriber station in a listening interval before the sleep interval that the mobile subscriber station must perform the periodic ranging in the sleep interval.

6. The method as claimed in claim 5, wherein reporting to the mobile subscriber station is transmitting a traffic indication message to the mobile subscriber station.

7. The method as claimed in claim 6, wherein the traffic indication message includes a sleep identifier for the mobile subscriber station which notifies a positive indication, that represents the mobile subscriber station shall remain in the listening interval.

8. The method as claimed in claim 5, further comprising the step of performing the periodic ranging at the particular time point together with the mobile subscriber station after reporting to the mobile subscriber station that the mobile subscriber station must perform the periodic ranging in the sleep interval.

9. A method for performing periodic ranging in a broadband wireless access communication system having an awake mode in which data to be transmitted between a mobile subscriber station and a base station exists and the sleep mode in which data to be transmitted between the mobile subscriber station and the base station is non-existent, the sleep mode having a sleep interval and a listening interval, the mobile subscriber station being capable of receiving data in the listening interval and being incapable of receiving data in the sleep interval, the method comprising the steps of:
detecting that it is necessary for the mobile subscriber station in the sleep mode to perform the periodic ranging at a particular time point in the sleep interval; and
reporting to the mobile subscriber station in a listening interval before the sleep interval that the mobile subscriber station must perform the periodic ranging after staying in the sleep interval during a predetermined interval from a start point of the sleep interval.

10. The method as claimed in claim 9, further comprising the step of performing the periodic ranging at the particular time point together with the mobile subscriber station after staying in the sleep interval during the predetermined interval from the start point of the sleep interval, after reporting to the mobile subscriber station that the mobile subscriber station must perform the periodic ranging in the sleep interval.

11. The method as claimed in claim 9, wherein, in the step of reporting that it is necessary to perform the periodic ranging, a necessity to perform the periodic ranging is reported with information that it is necessary for the mobile subscriber station to transit into the sleep mode after performing the periodic ranging.

12. A method for performing periodic ranging in a broadband wireless access communication system having an awake mode in which data to be transmitted between a mobile subscriber station and a base station exists and the sleep mode in which data to be transmitted between the mobile subscriber station and the base station is non-existent, the sleep mode having a sleep interval and a listening interval, the mobile subscriber station being capable of receiving data in the listening interval and being incapable of receiving data in the sleep interval, the method comprising the steps of:
detecting that it is necessary for the mobile subscriber station in the sleep mode to perform the periodic ranging at a particular time point in the sleep interval and then receive control information from the base station; and
reporting to the mobile subscriber station in a listening interval before the sleep interval that the mobile subscriber station must perform the periodic ranging and then receive the control information after staying in the sleep interval during a predetermined interval from a start point of the sleep interval.

13. The method as claimed in claim 12, further comprising the step of staying in the sleep interval during the predetermined interval, performing the periodic ranging, and then transmitting the control information to the mobile subscriber station, after reporting to the mobile subscriber station that the mobile subscriber station must perform the periodic ranging in the sleep interval.

14. A method for performing periodic ranging in a broadband wireless access communication system having an awake mode in which data to be transmitted between a mobile subscriber station and a base station exists and the sleep mode in which data to be transmitted between the mobile subscriber station and the base station is non-existent, the sleep mode having a sleep interval and a listening interval, the mobile subscriber station being capable of receiving data in the listening interval and being incapable of receiving data in the sleep interval, the method comprising the step of:
receiving a report in a listening interval before the sleep interval that it is necessary to perform together with the base station the periodic ranging at a particular time point in the sleep interval.

15. The method as claimed in claim 14, further comprising the step of performing the periodic ranging at the particular time point together with the base station in response to the report.

16. A method for performing periodic ranging in a broadband wireless access communication system having an awake mode in which data to be transmitted between a mobile subscriber station and a base station exists and the sleep mode in which data to be transmitted between the mobile subscriber station and the base station is non-existent, the sleep mode having a sleep interval and a listening interval, the mobile subscriber station being capable of receiving data in the listening interval and being incapable of receiving data in the sleep interval, the method comprising the step of:
receiving a report in a listening interval before the sleep interval that it is necessary to perform together with the base station the periodic ranging after staying in the sleep interval during a predetermined interval from a start point of the sleep interval.

17. The method as claimed in claim 16, further comprising the step of staying in the sleep interval during the predetermined interval from the start point of the sleep interval, transiting from the sleep mode into the awake mode, and then performing the periodic ranging, in response to the report.

18. The method as claimed in claim 17, further comprising the step of transiting into the sleep mode after performing the periodic ranging.

19. A method for performing periodic ranging in a broadband wireless access communication system having an awake mode in which data to be transmitted between a mobile subscriber station and a base station exists and the sleep mode in which data to be transmitted between the mobile subscriber station and the base station is non-existent, the sleep mode having a sleep interval and a listening interval, the mobile subscriber station being capable of receiving data in the listening interval and being incapable of receiving data in the sleep interval, the method comprising the step of:
receiving a report in a listening interval before the sleep interval that it is necessary to perform together with the base station the periodic ranging and then receive the control information after staying in the sleep interval during a predetermined interval from a start point of the sleep interval.

20. The method as claimed in claim 19, further comprising the steps of:
staying in the sleep interval during the predetermined interval from the start point of the sleep interval, transiting from the sleep mode into the awake mode, and then performing the periodic ranging in response to the report; and
receiving the control information from the base station.

21. A system for performing periodic ranging in a broadband wireless access communication system having an awake mode in which data to be transmitted between a mobile subscriber station and a base station exists and the sleep mode in which data to be transmitted between the mobile subscriber station and the base station is non-existent, the sleep mode having a sleep interval and a listening interval, the mobile subscriber station being capable of receiving data in the listening interval and being incapable of receiving data in the sleep interval, the system comprising:
the base station which reports to the mobile subscriber station in a listening interval before the sleep interval that the mobile subscriber station must perform the periodic ranging in the sleep interval when the base station detects that it is necessary for the mobile subscriber station in the sleep mode to perform the periodic ranging at a particular time point in the sleep interval; and
the mobile subscriber station which receives the report from the base station in the listening interval, transits from the sleep mode into the awake mode, and then performs the periodic ranging at the particular time point together with the base station.

22. A system for performing periodic ranging in a broadband wireless access communication system having an awake mode in which data to be transmitted between a mobile subscriber station and a base station exists and the sleep mode in which data to be transmitted between the mobile subscriber station and the base station is non-existent, the sleep mode having a sleep interval and a listening interval, the mobile subscriber station being capable of receiving data in the listening interval and being incapable of receiving data in the sleep interval, the system comprising:
the base station which reports to the mobile subscriber station in a listening interval before the sleep interval that the mobile subscriber station must perform the periodic ranging after staying in the sleep interval during a predetermined interval from a start point of the sleep interval when the base station detects that it is necessary for the mobile subscriber station in the sleep mode to perform the periodic ranging at a particular time point in the sleep interval; and
the mobile subscriber station which receives the report from the base station in the listening interval, stays in the sleep interval during the predetermined interval, transits from the sleep mode into the awake mode, and performs the periodic ranging together with the base station.

23. The system as claimed in claim 22, wherein the mobile subscriber station transits into the sleep mode after performing the periodic ranging.

24. A system for performing periodic ranging in a broadband wireless access communication system having an awake mode in which data to be transmitted between a mobile subscriber station and a base station exists and the sleep mode in which data to be transmitted between the mobile subscriber station and the base station is non-existent, the sleep mode having a sleep interval and a listening interval, the mobile subscriber station being capable of receiving data in the listening interval and being incapable of receiving data in the sleep interval, the system comprising:
the base station which reports to the mobile subscriber station in a listening interval before the sleep interval that the mobile subscriber station must perform the periodic ranging and then receive control information after staying in the sleep interval during a predetermined interval from a start point of the sleep interval when the base station detects that it is necessary for the mobile subscriber station in the sleep mode to perform the periodic ranging at a particular time point in the sleep interval and then receive the control information; and
the mobile subscriber station which receives the report from the base station in the listening interval, stays in the sleep interval during the predetermined interval, transits from the sleep mode into the awake mode, performs the periodic ranging together with the base station, and then receives the control information.
